(19) Europäisches Patentamt
European Patent Office
Office européen des brevets

(11) **EP 2 947 437 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(21) Anmeldenummer: **15168465.1**

(22) Anmeldetag: **20.05.2015**

(51) Int Cl.:
*G01K 3/00* (2006.01)      *G01K 7/16* (2006.01)
*G01K 7/18* (2006.01)      *G01K 7/22* (2006.01)
*G01K 13/00* (2006.01)     *H02P 3/06* (2006.01)
*H02K 11/25* (2016.01)

(54) **MESSSCHALTUNG ZUR TEMPERATURÜBERWACHUNG**

MEASUREMENT CIRCUIT FOR TEMPERATURE MONITORING

CIRCUIT DE MESURE POUR LE CONTRÔLE DE LA TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2014 DE 102014107170**

(43) Veröffentlichungstag der Anmeldung:
**25.11.2015 Patentblatt 2015/48**

(73) Patentinhaber: **KRIWAN INDUSTRIE-ELEKTRONIK GMBH 74670 Forchtenberg (DE)**

(72) Erfinder:
• **Peng, Xiaoming**
  **74613 Öhringen (DE)**
• **Kretschmer, Ulf**
  **74613 Öhringen (DE)**

(74) Vertreter: **Tetzner, Michael et al TETZNER & PARTNER mbB Patent- und Rechtsanwälte Van-Gogh-Strasse 3 81479 München (DE)**

(56) Entgegenhaltungen:
**EP-A1- 0 125 366      DE-A1- 19 540 625**
**US-A- 3 644 864**

EP 2 947 437 B1

**Beschreibung**

Die Erfindung betrifft eine Messschaltung zur Temperaturüberwachung sowie eine Schutzeinrichtung zur Temperaturüberwachung mit einer solchen Messschaltung.

Elektromotoren unterliegen der Gefahr der Überhitzung der Motorwicklung, wobei Überlastungen, schlechte Netzqualitäten (Unterspannung/Überspannung), eine behinderte Kühlung, ein blockierte Läufer und dergleichen, zu den häufigsten Ausfallursachen zählen. Motoren, insbesondere Kälte-Verdichtermotoren, die hoch ausgenutzt sind und deshalb einer Zwangskühlung unterliegen, müssen vor solchen Gefahren geschützt werden.

Die DE 198 22 056 A1 offenbart eine Temperaturschutzschaltung zum Schutz elektrischer Geräte mit einer Reihenschaltung von PTC-Thermistoren abgestufter Nennansprechtemperaturen. Die Kennlinie von PTC-Thermistoren ist von Raumtemperatur bis wenige Grad Celsius unterhalb der Nennansprechtemperatur NAT relativ flach und steigt dann exponentiell an. Eine Aussage über die Wicklungstemperatur ist mit solchen PTC-Thermistoren nicht möglich. Jedoch lässt sich die Veränderung des Widerstandswertes im Bereich der Nennansprechtemperatur NAT von einer Auswertungseinrichtung eines Auslösegerätes erfassen. Der Abschaltvorgang des Motors wird dann ausgelöst, wenn die Auswertungseinrichtung eine Überschreitung der Nennansprechtemperatur NAT festgestellt hat.

Obwohl PTC-Sensoren sehr klein sind, können Sie aufgrund der thermischen Übergangswiderstände zwischen Sensor und Wicklung dem sehr raschen Temperaturanstieg nur verzögert folgen. Bei Kälteverdichtermotoren mit Wicklungsstromdichten bis 80 A/mm$^2$ steigen im Kurzschlussfall die Temperaturen mit 25-30 K/s an. Dies bedeutet, dass bereits Abschaltverzögerungen von wenigen Sekunden einen sehr hohen Temperaturüberlauf erzeugen können. Die Abschaltung erfolgt erst dann, wenn die erfasste Temperatur die Nennansprechtemperatur erreicht hat. Zu diesem Zeitpunkt liegt die tatsächliche Wicklungstemperatur jedoch schon deutlich über dem vorgegebenen Schwellenwert.

Die EP 2 187 494 B1 schlägt daher eine Schutzeinrichtung für elektrische Motoren mit einer Sensorschaltung mit wenigstens einem ersten PTC-Sensor und wenigstens einem zweiten PTC-Sensor vor, wobei die Nennansprechtemperaturen unterschiedlich groß sind. Die beiden PTC-Sensoren sind dabei so miteinander verschaltet, dass der Gesamtwiderstand der Sensorschaltung eine Kennlinie aufweist, die im Bereich der Nennansprechtemperaturen jeweils einen Wendepunkt vorsieht. Mit einer derartigen Kennlinie lässt sich das Erreichen einer kritischen Situation noch schneller erfassen.

Aus der DE 195 40 625 A1 ist eine Schutzschaltung zur Überwachung von Geräte- und/oder Maschinentemperaturen bekannt, wobei die Schutzschaltung wenigstens einen ersten PTC-Thermistor aufweist und an ein Auslösegerät anschließbar ist, das bei Überschreiten eines oberen Widerstandswertes der Schutzschaltung einen Abschaltvorgang einleitet. Die Schutzschaltung weist ferner wenigstens einen zweiten PTC-Thermistor auf, der in Reihe zum ersten PTC-Thermistor geschaltet ist und eine niedrigere Nennansprechtemperatur aufweist, und ferner wenigstens ein parallel zum zweiten PTC-Thermistor geschaltetes Schaltungselement, das den Gesamtwiderstand der Schutzschaltung zumindest bis zum Erreichen der Nennansprechtemperatur des ersten PTC-Thermistors unter dem oberen Widerstandswert hält.

Die US 3 644 864 A offenbart einen Temperatursensor, der ebenfalls zwei in Reihe geschaltete PTC-Thermistoren aufweist.

Weiterhin ist aus der EP 0 125 366 A1 ein Temperatursensor für Motorfahrzeuge bekannt, der durch eine Zusammenschaltung von PTC- und NTC-Thermistoren gebildet wird, wobei die Gesamt-Temperaturcharakteristik negativ ist und bei der normalen Arbeitstemperatur ein Plateau aufweist.

Wenngleich sich PTC-Thermistoren als Übertemperaturschutz bewährt haben, gibt es Anwendungen, bei denen Sie nachteilig sind. Dies ist insbesondere dann der Fall, wenn es zu einem ungewöhnlich schnellen Temperaturanstieg kommt. In diesem Fall würde eine klassische Auslösung bei Überschreitung der Nennansprechtemperatur zu einem großen Temperaturüberlauf führen, der gefährliche Folgen haben könnte.

Darüber hinaus stellt jede Schutzabschaltung einen Verlust der Anlagenverfügbarkeit dar und kann somit erhebliche Konsequenzen haben. Bei hoch ausgelasteten Motoren, wo die Verfügbarkeit der damit betriebenen Anlage sehr wichtig ist, ist es wünschenswert, dass bei Erreichen eines alarmierenden Temperaturbereiches, weitere Maßnahmen zur Vermeidung eines weiteren Temperaturanstiegs eingeleitet werden, um eine Schutzabschaltung bei Erreichen der Nennansprechtemperatur noch abzuwenden. Hierzu werden entsprechende Vorschläge in der DE 10 2005 052 042 gemacht. Die Realisierung dieser Zusatzfunktion bedingt aber in der Regel die Verwendung zusätzlicher Messkanäle bzw. -geräte.

Die DE 602 05 697 T2 betrifft eine Halbleitervorrichtung mit einem Temperaturveränderungsdetektor und eine Temperaturkorrigierer, wobei Abtastwiderstände eines Typs A und Abtastwiderstände eines Typs B zum Einsatz kommen, wobei die Abtastwiderstände des Typs A einen positiven Temperaturkoeffizienten und einen sich linear erhöhenden Widerstandswert aufweisen und die Abtastwiderstände des Typs B durch eine nichtlineare Widerstandskurve charakterisiert sind, die sich mit der Temperatur allmählich verringert. Eine präzise Temperaturmessung ist mit diesem Temperaturveränderungsdetektor weder vorgesehen noch denkbar.

Der Erfindung liegt daher die Aufgabe zugrunde, eine einfach zu realisierende Messschaltung zur Temperaturüberwachung zu schaffen, die neben der qualitativen Grenzwertüberwachung auch eine präzise Temperaturerfassung ermöglicht.

Erfindungsgemäß wird diese Aufgabe durch die Merkmale des Anspruchs 1 gelöst. Zusätzliche Ausgestaltungen der Erfindung sind Gegenstand der weiteren Ansprüche.

Die erfindungsgemäße Messschaltung zur präzisen Temperaturerfassung und zur qualitativen Überwachung von Grenztemperaturen weist einen quantitativen Temperatursensor und wenigstens einem qualitativen Temperatursensor auf, wobei,

- der quantitative Temperatursensor und der wenigstens eine qualitative Temperatursensor in Reihe geschaltet sind,

- der quantitative Temperatursensor zur präzisen Temperaturmessung als Widerstandsthermometer mit positivem Temperaturkoeffizienten ausgebildet ist und eine stetige, streng monoton steigende Kennlinie aufweist und

- der qualitative Temperatursensor zur qualitativen Überwachung von Grenztemperaturen als Widerstandsthermometer mit positivem Temperaturkoeffizienten ausgebildet ist und eine Nennansprechtemperatur (NAT) aufweist, bei der sich sein Widerstandswert nichtlinear verändert.

Weiterhin ist eine Schutzeinrichtung für elektrische Motoren mit einer solchen Messschaltung vorgesehen. Die Schutzeinrichtung weist ferner ein Auslösegerät mit einer Auswertungseinrichtung auf, um das sich aufgrund des Gesamtwiderstandes der Messschaltung ergebende Messsignal auszuwerten und ein Ausgangssignal für das Auslösegerät in Abhängigkeit des Messsignals zu erzeugen. Die Funktion und Wirkungsweise des Auslösegeräts ist allgemein bekannt. Diesbezüglich wird ferner auf die EP 2 187 494 B1 Bezug genommen.

Unter einem qualitativen Temperatursensor wird ein Sensor verstanden, der an einer Überwachungsstelle erfassen kann, ob die Temperatur oberhalb oder unterhalb eines bestimmten Grenzwertes liegt. Derartige Sensoren weisen eine stark nichtlineare, oft sprungartige Änderung um eine bestimmte Temperatur (Nennansprechtemperatur) auf. Als quantitativer Sensor wird im Sinne der Erfindung ein Sensor verstanden, der dafür geeignet ist, eine präzise Temperatur an einer Überwachungsstelle zu erfassen und eine stetige, streng monoton steigende Kennlinie aufweist.

Sowohl bei dem quantitativen Temperatursensor als auch bei dem qualitativen Temperatursensor handelt es sich vorzugsweise um passive Widerstandsthermometer.

Durch die erfindungsgemäße Messschaltung ist eine flexible Überwachung über einen einzigen Messkanal möglich. Der qualitative Temperatursensor, der beispielsweise durch einen PTC-Thermistor gebildet wird, übernimmt dabei die primäre Aufgabe der qualitativen Grenzwertüberwachung durch seine Nennansprechtemperatur (NAT), bei der der Widerstandswert des Sensors exponentiell ansteigt. Der quantitative Temperatursensor, der beispielsweise durch einen PT1000 oder einen KTY-Siliziummesswiderstand gebildet wird, übernimmt die sekundäre Aufgabe einer präzisen Temperaturerfassung für zusätzliche, temperaturabhängige, funktionelle Anwendungen.

PTC-Thermistoren haben den Vorteil, dass sie eine genormte Kennlinie aufweisen. Die Nennansprechtemperatur der Messschaltung wird durch den Sensor mit seiner Temperatur und nicht durch das Auslösegerät definiert. Daher spielt eine etwaige Toleranz in der Auswertungselektronik nahezu keine Rolle. Des Weiteren wird die thermische Trägheit zwischen der zu überwachenden Stelle und dem Sensorausgang durch die exponentiell ansteigende Kennlinie um die Nennansprechtemperatur stark kompensiert.

Gemäß einer weiteren Ausgestaltung der Erfindung ist vorgesehen, zwei oder mehrere qualitative Temperatursensoren in Reihe zu schalten. Dies ermöglicht die Positionierung der zwei oder mehreren qualitativen Temperatursensoren an unterschiedlichem Messstellen, so dass die Temperaturen an unterschiedlichem Messstellen mit einem Messerkanal überwacht werden können.

Gemäß einer bevorzugten Ausgestaltung der Erfindung wird der wenigstens eine qualitative Temperatursensor durch wenigstens einen Thermistor gebildet, der unterhalb einer Nennansprechtemperatur einen flachen Widerstandsverlauf aufweist, wobei der quantitative Temperatursensor unterhalb der Nennansprechtemperatur einen Widerstandsverlauf aufweist, der gegenüber dem flachen Widerstandsverlauf des qualitativen Temperatursensors eine größere, vorzugsweise wenigstens doppelt so große, Veränderung aufweist. Durch den quantitativen Temperatursensor wird in einem Messbereich unterhalb der Nennansprechtemperatur ein zusätzlicher Messbereich geschaffen, indem eine präzise Temperaturerfassung möglich ist.

Als quantitativer Temperatursensor kann jeder beliebige, temperaturabhängige Messwiderstand eingesetzt werden, die in dem gesamten, zu definierenden Messbereich einen (deutlich) kleineren Widerstandswert als der Widerstandswert des qualitativen Sensors bei der Nennansprechtemperatur aufweist.

Neben der Überwachung von elektrischen Motoren kann die erfindungsgemäße Messschaltung auch bei anderen Anwendungen, beispielsweise für eine Heissgastemperaturüberwachung für Kältemittelverdichter, eingesetzt werden Weitere Vorteile und Ausgestaltungen der Erfindung werden anhand der nachfolgenden Beschreibung und der Zeichnung näher erläutert.

In der Zeichnung zeigen

Fig. 1     Schaltbild einer Messschaltung mit einem quantitativen Temperatursensor und einem qualitativen Temperatursensor,

Fig. 2     Temperatur-Widerstands-Diagramm des Ausführungsbeispiels gemäß Fig. 1,

Fig. 3     Schaltbild einer Messschaltung mit einem quantitativen Temperatursensor und zwei qualitativen Temperatursensoren,

Fig. 4     Temperatur-Widerstands-Diagramm des Ausführungsbeispiels gemäß Fig. 3 für den Fall, dass der PTC-Thermistor PCT2.1 einer ersten Messstelle vor dem PTC-Thermistor PCT2.2 einer zweiten Messstelle an seiner Nennansprechtemperatur anspricht und

Fig. 5     Temperatur-Widerstands-Diagramm des Ausführungsbeispiels gemäß Fig. 3 für den Fall, dass der PTC-Thermistor PCT2.2 an der zweiten Messstelle vor dem PTC-Thermistors PCT2.1 an der ersten Messstelle anspricht.

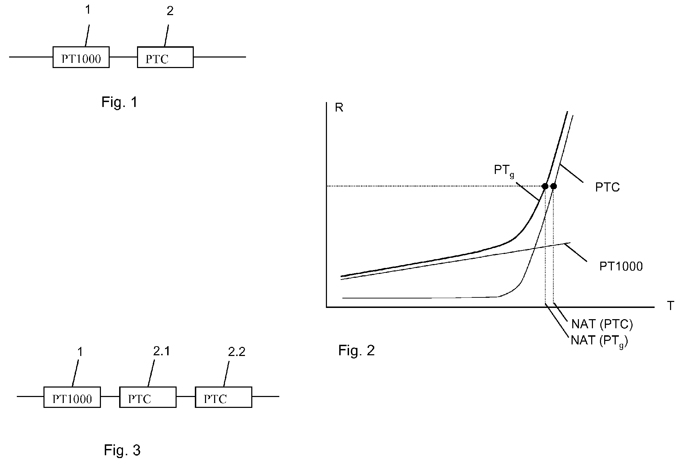

Fig. 1 zeigt eine Messschaltung mit einem quantitativen Temperatursensor 1 und einem qualitativen Temperatursensor 2, die in Reihe geschaltet sind. Der quantitative Temperatursensor 1 wird in diesem Ausführungsbeispiel durch einen PT1000 und der qualitative Temperatursensor 2 durch einen PTC-Thermistor gebildet.

Im Temperatur-Widerstandsdiagrammen der Fig. 2 ergibt sich die Gesamtkennlinie $PT_g$ der Messschaltung als Summe der Widerstände der beiden Temperatursensoren 1,2:

$$PT_g = PTC + PT1000 \tag{1}$$

Die Nennansprechtemperatur $NAT(PT_g)$ der Gesamtkennlinie weicht wegen des steilen exponentiellen Anstiegs der PTC-Kennlinie in diesem Bereich nur minimal von der Nennansprechtemperatur $NAT(PCT)$ der PTC-Kennlinie ab und liegt in dem herstellungsbedingten Toleranzbereich. Die Nennansprechtemperatur $NAT(PT_g)$ der Gesamtkennlinie kann somit als die des PTC-Thermistors betrachtet werden und ist daher kompatibel zu herkömmlichen Auslösegeräten.

Im gesamten, flachen Bereich des Widerstandsverlaufs der PTC-Kennlinie lässt sich die Gesamtkennlinie $PT_g$ wie folgt annähern:

$$PT_g = PTC_{25°C} + PT1000 \tag{2}$$

wobei $PTC_{25°C}$ der PTC-Widerstandswert bei 25°C ist.

Somit lässt sich die Temperatur dem gemessenen Widerstandswert $PT_g$ in dem gesamten flachen Bereich der PTC-Kennlinie anhand der Gleichung (2) und der PT1000-Kennlinie des verwendeten quantitativen Sensors 1 eindeutig zuordnen. Sekundäre temperaturabhängige Anwendungen, wie die Überwachung eines weiteren Temperaturwertes oder eine Analyse des Temperaturverhaltens bzw. der zeitlichen Veränderungen, können dann zusätzlich zu der primären NAT-Überwachung flexibel umgesetzt werden.

In entsprechender weise können auch mehrere qualitative Temperatursensoren 2 mit gleichen oder individuellen Nennansprechtemperaturen vorgesehen werden, die an unterschiedlichen Überwachungsstellen angeordnet werden. Fig. 3 zeigt ein solches Ausführungsbeispiel mit 2 PTC-Thermistoren. Dabei ist entscheidend, dass nur ein einziger quantitativer Sensor 1 für eine ausgewählte Überwachungsstelle verwendet wird. Die Temperaturauswertung für die ausgewählte Überwachungsstelle erfolgt mit der Annäherungsformel (3), sofern keine der Überwachungsstellen ihre individuell durch den qualitativen Sensor 2 definierte Nennansprechtemperatur erreicht hat:

$$PT_g = \sum_1^n PTC_{25°C} + PT1000 \tag{3}$$

wobei n die Anzahl der PTC-Thermistoren ist.

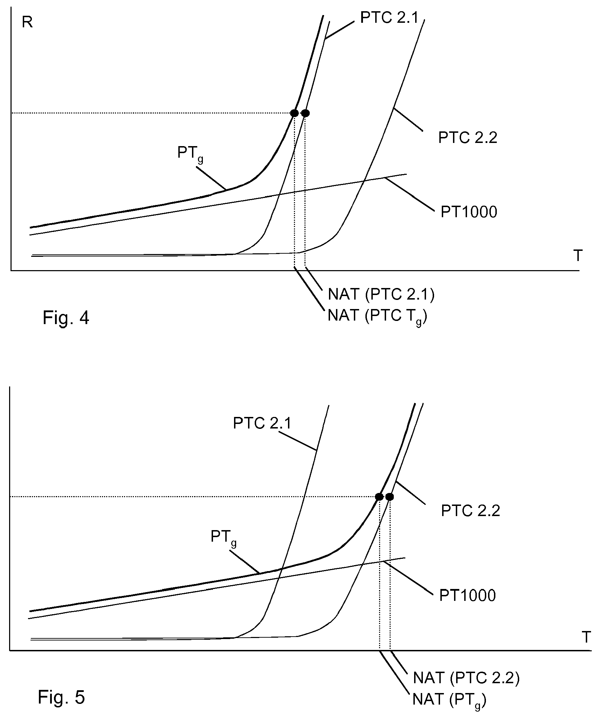

Fig. 4 zeigt das Temperatur-Widerstands-Diagramm des Ausführungsbeispiels gemäß Fig. 3 für den Fall, dass die Temperatur an einer ersten Überwachungsstelle, an welcher der PTC-Thermistor PCT2.1 angeordnet ist, die Nennansprechtemperatur erreicht hat, während die Temperatur an der zweiten Überwachungsstelle, an welcher der PTC-Thermistor PCT2.2 angeordnet ist, noch unterhalb der Nennansprechtemperatur liegt. Die Auswertung ist dann analog zu Fig. 2.

Fig. 5 zeigt das Temperatur-Widerstands-Diagramm des Ausführungsbeispiels gemäß Fig. 3 für den Fall, dass die Temperatur an der zweiten Überwachungsstelle, an welcher der PTC-Thermistor PCT2.2 angeordnet ist, die Nennansprechtemperatur zuerst erreicht. Die Auswertung ist dann wiederum analog zu Fig. 2.

**Patentansprüche**

1. Messschaltung zur präzisen Temperaturerfassung und zur qualitativen Überwachung von Grenztemperaturen mit einem quantitativen Temperatursensor und wenigstens einem qualitativen Temperatursensor (2; 2.1, 2.2), wobei,

   - der quantitative Temperatursensor (1) und der wenigstens eine qualitative Temperatursensor (2; 2.1, 2.2) in Reihe geschaltet sind,
   - der quantitative Temperatursensor zur präzisen Temperaturmessung als Widerstandsthermometer mit positivem Temperaturkoeffizienten ausgebildet ist und eine stetige, streng monoton steigende Kennlinie aufweist und
   - der qualitative Temperatursensor zur qualitativen Überwachung von Grenztemperaturen als Widerstandsthermometer mit positivem Temperaturkoeffizienten ausgebildet ist und eine Nennansprechtemperatur (NAT) aufweist, bei der sich sein Widerstandswert nichtlinear verändert.

2. Messschaltung nach Anspruch 1, **dadurch gekennzeichnet, dass** der wenigstens eine qualitative Temperatursensor (2; 2.1, 2.2) eine Nennansprechtemperatur (NAT) aufweist, bei der der Widerstandswert des qualitativen Temperatursensors exponentiell ansteigt.

3. Messschaltung nach Anspruch 1, **dadurch gekennzeichnet, dass** das quantitative und das qualitative Widerstandsthermometer als passive Widerstandsthermometer ausgebildet sind.

4. Messschaltung nach Anspruch 1, **dadurch gekennzeichnet, dass** zwei oder mehrere qualitative Temperatursensoren (2.1, 2.2) in Reihe geschaltet sind.

5. Messschaltung nach Anspruch 4 , **dadurch gekennzeichnet, dass** die zwei oder mehreren qualitativen Temperatursensoren an unterschiedlichen Messstellen angeordnet sind.

6. Messschaltung nach Anspruch 1, **dadurch gekennzeichnet, dass** der wenigstens eine qualitative Temperatursensor (2; 2.1, 2.2) durch wenigstens einen Thermistor gebildet wird, der unterhalb der Nennansprechtemperatur (NAT) einen flachen Widerstandsverlauf aufweist, wobei der quantitative Temperatursensor (1) unterhalb der Nennansprechtemperatur einen Widerstandsverlauf aufweist, der gegenüber dem flachen Widerstandsverlauf des qualitativen Temperatursensors (2; 2.1, 2.2) eine größere Veränderung aufweist.

7. Messschaltung nach Anspruch 6, **dadurch gekennzeichnet, dass** der quantitative Temperatursensor (1) unterhalb der Nennansprechtemperatur (NAT) einen Widerstandsverlauf aufweist, der gegenüber dem flachen Widerstandsverlauf des qualitativen Temperatursensors (2; 2.1, 2.2) eine wenigstens doppelt so große Veränderung aufweist.

8. Messschaltung nach Anspruch 1, **dadurch gekennzeichnet, dass** der quantitative Temperatursensor (1) in seinem gesamten Messbereich einen kleineren Widerstandswert als der Widerstandswert des qualitativen Temperatursensors (2; 2.1, 2.2) bei der Nennansprechtemperatur aufweist.

9. Schutzeinrichtung zur Temperaturüberwachung mit einer Messschaltung gemäß Anspruch 1.

**Claims**

1. Measurement circuit for precise temperature measurement and for qualitative limit value monitoring having one quantitative temperature sensor and at least one qualitative temperature sensor (2; 2.1, 2.2), whereby

   - the quantitative temperature sensor (1) and the at least one qualitative temperature sensor (2; 2.1, 2.2) are connected in series,

- the quantitative temperature sensor for precise temperature measurement is formed as resistance thermometer having positive temperature coefficients and has a consistent characteristic line which increases in a strictly monotonous manner, and
- the qualitative temperature sensor for qualitative limit value monitoring is formed as resistance thermometer having positive temperature coefficients and has a nominal response temperature (NAT) at which it's resistance value changes in a non-linear manner.

2. Measurement circuit according to claim 1, **characterised in that** the at least one qualitative temperature sensor (2; 2.1, 2.2) has a nominal response temperature (NAT) at which the resistance value of the qualitative temperature sensor increases exponentially.

3. Measurement circuit according to claim 1, **characterised in that** the quantitative and the qualitative resistance thermometers are constructed as passive resistance thermometers.

4. Measurement circuit according to claim 1, **characterised in that** two or more qualitative temperature sensors (2.1, 2.2) are connected in series.

5. Measurement circuit according to claim 4, **characterised in that** the two or the more qualitative temperature sensors are arranged at different measurement locations.

6. Measurement circuit according to claim 1, **characterised in that** the at least one qualitative temperature sensor (2; 2.1, 2.2) is formed by at least one thermistor which has a flat resistance path below the nominal response temperature (NAT), the quantitative temperature sensor (1) below the nominal response temperature having a resistance path which has a larger change compared with the flat resistance path of the qualitative temperature sensor (2; 2.1, 2.2).

7. Measurement circuit according to claim 6, **characterised in that** the quantitative temperature sensor (1) below the nominal response temperature (NAT) has a resistance path which has a change which is at least twice as large as the flat resistance path of the qualitative temperature sensor (2; 2.1, 2.2).

8. Measurement circuit according to claim 1, **characterised in that** the quantitative temperature sensor (1) in the entire measurement range thereof has a smaller resistance value than the resistance value of the qualitative temperature sensor (2; 2.1, 2.2) at the nominal response temperature.

9. Protection device for temperature monitoring having a measurement circuit according to claim 1.

**Revendications**

1. Circuit de mesure servant à la détection de température précise et à la surveillance qualitative de températures limites, avec un capteur de température quantitatif et au moins un capteur de température qualitatif (2 ; 2.1, 2.2), où

- le capteur de température quantitatif (1) et le capteur de température qualitatif (2 ; 2.1, 2.2) au moins au nombre de un sont montés en série,
- le capteur de température quantitatif servant à la mesure de température précise est conçu comme un thermomètre à résistance ayant des coefficients de température positifs et présente une courbe caractéristique continue, croissante de façon rigoureusement monotone, et
- le capteur de température qualitatif servant à la surveillance qualitative de températures limites est conçu comme un thermomètre à résistance ayant des coefficients de température positifs et présente une température de réponse nominale (NAT) au niveau de laquelle la valeur de résistance dudit capteur de température qualitatif varie de façon non linéaire.

2. Circuit de mesure selon la revendication 1, **caractérisé en ce que** le capteur de température qualitatif (2 ; 2.1, 2.2) au moins au nombre de un présente une température de réponse nominale (NAT) au niveau de laquelle la valeur de résistance du capteur de température qualitatif augmente de façon exponentielle.

3. Circuit de mesure selon la revendication 1, **caractérisé en ce que** le thermomètre à résistance quantitatif et le thermomètre à résistance qualitatif sont conçus comme des thermomètres à résistance passifs.

**4.** Circuit de mesure selon la revendication 1, **caractérisé en ce que** deux ou plusieurs capteurs de température qualitatifs (2.1, 2.2) sont montés en série.

**5.** Circuit de mesure selon la revendication 4, **caractérisé en ce que** les deux capteurs de température qualitatifs, ou bien la pluralité de ces mêmes capteurs de température qualitatifs, sont disposés en différents points de mesure.

**6.** Circuit de mesure selon la revendication 1, **caractérisé en ce que** le capteur de température qualitatif (2 ; 2.1, 2.2) au moins au nombre de un est formé par au moins un thermistor qui, au-dessous de la température de réponse nominale (NAT), présente un profil de résistance plat, où le capteur de température quantitatif (1) présente, au-dessous de la température de réponse nominale, un profil de résistance qui présente une plus grande variation par rapport au profil de résistance plat du capteur de température qualitatif (2 ; 2.1, 2.2).

**7.** Circuit de mesure selon la revendication 6, **caractérisé en ce que** le capteur de température quantitatif (1) présente, au-dessous de la température de réponse nominale (NAT), un profil de résistance qui présente une variation au moins deux fois aussi grande par rapport au profil de résistance plat du capteur de température qualitatif (2 ; 2.1, 2.2).

**8.** Circuit de mesure selon la revendication 1, **caractérisé en ce que** le capteur de température quantitatif (1) présente au niveau de la température de réponse nominale, dans la plage de mesure totale dudit capteur de température quantitatif, une valeur de résistance inférieure à la valeur de résistance du capteur de température qualitatif (2 ; 2.1, 2.2).

**9.** Dispositif de protection servant à la surveillance de la température, avec un circuit de mesure selon la revendication 1.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19822056 A1
- EP 2187494 B1
- DE 19540625 A1
- US 3644864 A
- EP 0125366 A1
- DE 102005052042
- DE 60205697 T2